Europäisches Patentamt

European Patent Office

Office européen des brevets

(11) Publication number: **0 112 612**
**B1**

(12) **EUROPEAN PATENT SPECIFICATION**

(45) Date of publication of patent specification: **30.03.88**

(51) Int. Cl.⁴: **F 28 F 11/00, F 16 L 55/16**

(21) Application number: **83305702.9**

(22) Date of filing: **23.09.83**

(54) Repairing degraded tubes of steam generators.

(30) Priority: **30.09.82 US 425212**

(43) Date of publication of application:
**04.07.84 Bulletin 84/27**

(45) Publication of the grant of the patent:
**30.03.88 Bulletin 88/13**

(84) Designated Contracting States:
**CH DE FR GB IT LI SE**

(56) References cited:
**FR-A-2 195 769**
**FR-A-2 282 097**
**GB-A-1 507 833**
**US-A-3 912 148**
**US-A-4 028 789**
**US-E- 30 802**

(73) Proprietor: **THE BABCOCK & WILCOX COMPANY**
**1010 Common Street P.O. Box 60035**
**New Orleans Louisiana 70160 (US)**

(72) Inventor: **Ayres, Paul S.**
**1657 Denwood Street**
**Alliance Ohio 44601 (US)**
Inventor: **Stark, Louis E.**
**3454 White Beech Lane**
**Youngstown Ohio 44511 (US)**
Inventor: **Feldstein, Joel G.**
**2722 Saxon Street N.E.**
**North Canton Ohio 44721 (US)**
Inventor: **Fu, Tzerong**
**2311 Echo Valley**
**Stow Ohio 44224 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to repairing degraded tubes of steam generators.

The economic performance of any power plant is closely related to the availability of the plant. In the nuclear industry, operating experience has demonstrated that the steam generator is a critical component of the plant in maintaining high availability. Steam generator tube leaks affect short term availability through forced outages. In addition, profilometer or eddy current examination of tubing and subsequent plugging of degraded or failed tubes will extend outages. However, this is a minor effect on availability compared to the influence of running at reduced power for extended periods of time, of derating the plant due to insufficient heating surface caused by tube plugging of the complete replacement of the steam generator.

Nuclear steam generators generally fall into two classes: the once-through design with vertically extending straight tubes and upper and lower tube sheets, and the U-tube design with a lower tube sheet from which vertically extending tubes are secured after a 180 degree turn in the upper region of the steam generator. Due to the close spacing of the tubes and operating pressure, ligament efficiency is low requiring tube sheet thicknesses in the region of 61 cm (24 in). In the initial assembly of the steam generator, the tubes are expanded for about 76 mm (3 in) at the lower ends and seal welded to the lower face of the lower tube sheet. A crevice of about 0.10 mm (7 mils) exists above the expanded portion of the tubes to the top face of the tube sheet. This crevice and the region immediately above the top face of the tube sheet is the site of caustic intergranular attack and stress corrosion of the tubes in operating units. Plugging the tubes obviously removes heating surface and sleeving, heretofore used, is only a temporary expedient since the sleeves will be subject to the same destructive environment as the tube. The problem to be solved is to identify a material suitable for a long-time repair of the degraded tube. This material should, ideally, meet several requirements: it should have resistiveness to the corrosive environment that caused the original tube to fail, it should have physical and mechanical properties equivalent to those of the original tube, and it should also have the same corrosion resistance on its interior surface exposed to the primary side (tube inside diameter) environment of the heat exchanger as the original tube.

Clearly, there is an urgent need for an improved solution for repairing degraded or leaking steam generator tubes.

US—A—4 028 789 discloses a tube of a steam generator, the tube being supported by a tube sheet of the steam generator, and the tube having a sealable sleeve comprising a tubular member inserted into the tube in a position spanning a region of degradation of the tube, for repairing the degraded tube, and expandable against the tube by the detonation of an explosive charge introduced into the sleeve, the sleeve having a pre-expanded portion at one end for positioning the sleeve in the tube within the tube sheet and adjacent the other end a plurality of external grooves filled with a brazing material which, following said explosive expansion of the sleeve against the tube, permits that end of the sleeve to be brazed to the tube by introducing a heating means therein effective to melt the brazing material in the grooves. There is no disclosure of how the sleeve is to be constructed. Inferentially, the sleeve would seem to be of a homogeneous construction.

FR—A—2 195 769 (which corresponds to GB—A—1 439 141) discloses a method of closing a bore of a metal heat exchanger tube secured in a tube-plate aperture by explosively welding a plug therein. The plug may, for example, be made from nickel.

GB—A—1 507 833 discloses a steam generator having internal thermally insulating sleeves disposed in heat exchanger tubes thereof in the region of an upper tube sheet that supports the tubes. The sleeves are of a composite structure, each of them comprising a pair of spaced coaxial tubes sealed together at their ends to define a closed interspace charged with inert gas. The tubes are, for example, both composed of ferritic or stainless steel.

The present invention provides an improved sleeve for effecting that type of repair in tubes of a steam generator which have been damaged by caustic intergranular attack on the external surface of the tube in the region of the tube sheet.

According to one aspect of the present invention there is provided a tube of a steam generator, the tube being supported by a tube sheet of the steam generator, and the tube having a sealable sleeve comprising a tubular member inserted into the tube in a position spanning a region of degradation of the tube, for repairing the degraded tube, and expandable against the tube by the detonation of an explosive charge introduced into the sleeve, the sleeve having a pre-expanded portion at one end for positioning the sleeve in the tube within the tube sheet and adjacent the other end a plurality of external grooves filled with a brazing material which, following said explosive expansion of the sleeve against the tube, permits that end of the sleeve to be brazed to the tube by introducing a heating means therein effective to melt the brazing material in the grooves, characterised in that the tubular member comprises an inner tubular member of the same material as the tube, and an outer member of substantially pure nickel which is thinner than the inner member and is metallurgically bonded to the inner member.

According to a second aspect of the invention there is provided a method of repairing a degraded tube of a steam generator, the tube being supported by a tube sheet of the steam generator, the method comprising inserting a sleeve comprising a tubular member into the tube in a position spanning a region of degradation of the tube, the sleeve having a pre-expanded portion at one end for positioning the sleeve in the tube within the tube sheet and adjacent the other end a plurality of external grooves filled with a brazing material, expanding the sleeve against the tube by detonating an explosive charge within the sleeve, and, following said explosive expansion of the sleeve against the tube, melting the brazing material by introducing a heating means into the sleeve to braze that end of the sleeve to the tube, characterised in that the tubular member comprises an inner tubular member of the same material as the tube, and an outer member of substantially pure nickel which is thinner than the inner member and is metallurgically bonded to the inner member.

By using the above-described multimetallic (composite) sleeve design, it is hoped that the life of nuclear steam generators can be extended upwardly to 40 years with minimum down-time and minimum exposure of repair personnel to radiation.

The invention will now be further described, by way of illustrative and non-limiting example, with reference to the accompanying drawings, in which:

Figure 1 is a sectional elevational view of a multimetallic (composite) sleeve;

Figure 2 is a partial schematic view showing the position of such a sleeve in one tube of a nuclear steam generator; and

Figure 3 shows in detail the features of an installed sleeve in a steam generator tube.

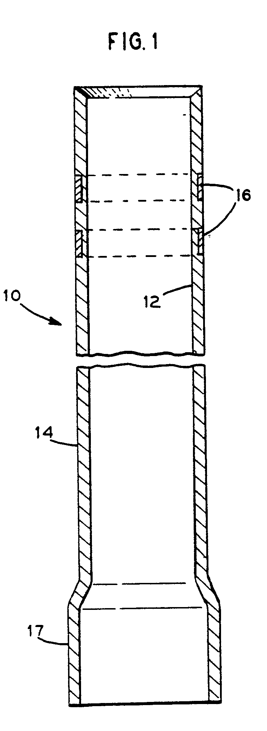

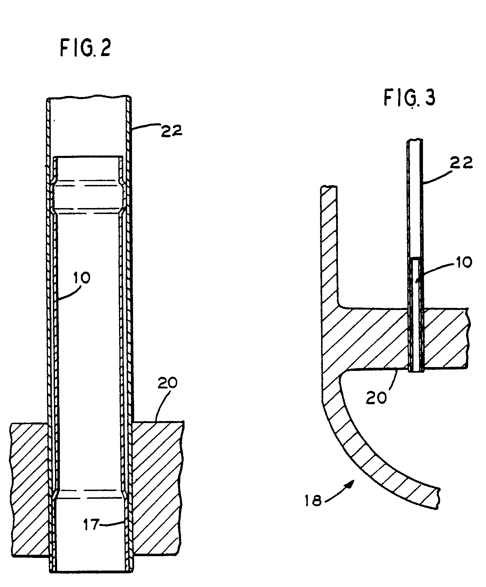

Figures 1, 2 and 3 show a multimetallic (composite) sleeve 10 before and after installation in a steam generator 18. The sleeve 10 comprises an inner core member 12 and an outer member 14. The inner core member 12 consists of a material compatible with the tube material to which it is attached. For example, in sleeving Inconel-600 tubes, the inner member 12 of the sleeve 10 will also be composed of Inconel-600. Inconel-600 is an alloy of nickel, chromium and iron in the composition ranges by weight of 72% minimum, 14 to 17% and 6 to 10%, respectively. For improved corrosion resistance the inner member 12 is subjected to a heat treatment at 718°C ± 28°C (1325°F ± 50°F) for about 15 hours and slow-cooled to room temperature, producing a stress relieved condition. The outer member 14 consists of a nickel alloy with a minimum content of 99% by weight of nickel, or pure nickel. The outer member 14 and the inner member 12 are coextruded at high temperature, producing a diffusion-bonded sleeve 10. A lower end 17 of the sleeve 10 is expanded over a length of about 19 mm (0.75 in) to an outside diameter slightly less than the inside diameter of a tube 22 (to be repaired) in which it is inserted for positioning of the sleeve 10 within the tube 22.

The upper end of the sleeve 10 has two annular rings 16, 6.35 mm (0.25 in) wide and spaced 6.35 mm (0.25 in) apart, in the form of grooves which are prebrazed with a filler metal in a vacuum furnace. The upper edge of the upper ring 16 is spaced by 25.4 mm (1.0 in) from the top of the sleeve 10. The filler metal is a brazing material, preferably an alloy of 82% gold and 18% nickel by weight. This material was selected due to its corrosion resistance, material availability, good brazing characteristics and good strength and ductility.

A typical tube sleeve 10 will have an outside diameter of 19 mm (0.75 in) and a total wall thickness of 1.27 mm (0.05 in) with the outer member 14 having a thickness of 0.127 mm (0.005 in) and the inner member having a thickness of 1.143 mm (0.045 in). The overall length of the sleeve 10 is 91.5 cm (36 in) and, when installed in the tube 22 in a tube sheet 20 of the steam generator 18, will extend about 30.5 cm (12 in) within the steam generator above the upper face of the tube sheet 20, spanning a defective area of the tube 22. The above-described construction presents the best material option for duty as a sleeve repair device in a nuclear steam generator tube that has been (and will continue to be) degraded by caustic intergranular attack on the outside diameter of the tube 22. This is a direct consequence of the use on the outer portion of the sleeve 10 of pure nickel, or an alloy with a minimum nickel content of 99% by weight, as a barrier to the caustic attack. These high nickel content materials are much less susceptible to caustic intergranular attack than is Inconel-600. While the nickel material has these desired corrosion resistive properties, it does not have attractive mechanical properties. Thus, if one chose to use pure nickel for the entire sleeve, the wall thickness of such a sleeve would be significantly larger than that of the tube described above. This would force a reduction in the inside diameter of the sleeve which would result in a reduction in fluid flow through the repaired tube 22, equivalent to plugging many of the degraded tubes, thus defeating the purpose of the sleeve repair.

A method of installing the tube 10 includes the following basic installation steps.

a. Clean the steam generator tube 22.

b. Insert the sleeve 10 into the tube 22 and expand the upper end of the sleeve.

c. Braze the sleeve 10 to the tube 22 at an upper attachment.

d. Explosively weld the sleeve 10 to the tube 22 at a lower attachment.

Since these steps each involve a tooling change, a batch process wherein the same operation is performed on a group of tubes 22 will minimise tooling changes. Batch sizes are flexible to match the requirements of the job.

Installation of the sleeve 10 requires the removal of loose oxides from the tube 22 in the vicinity of the explosive weld and cleaning the tube to bare metal in the vicinity of the braze. Cleaning can be accomplished using a combination hone and swab. In the braze region the cleaning operation takes two minutes. Thirty seconds is sufficient at the explosive weld.

After cleaning a batch of steam generator tubes, sleeves are inserted into the tubes and explosively expanded in the braze region. An explosive cartridge is inserted into the sleeve 10 outside the steam generator 18, the assembly of the cartridge and sleeve is inserted into a tube 22, and the cartridge is detonated to expand the sleeve 10 into the tube 22 over a 51 mm (2 in) length in the braze region. The tube 22 is expanded to a range of between 0.08 and 0.30 mm (2 and 12 mils), forming a mechanical joint with the sleeve 10 which supports the sleeve 10 during subsequent operations. The spent explosive cartridge is then removed.

After insertion and expansion of the sleeve 10, a batch of sleeves 10 are brazed to the tubes 22 at the upper joint or attachment. Brazing is initiated by a water cooled induction heater which uses a fibre optic system to measure and control the temperature cycle.

Before activating the induction heater in the sleeve 10 to be brazed, argon flow is established for 5 minutes from the end of the tube opposite to the end being sleeved. Flow of gas for the first 5 minutes is controlled to 1.42 m³/h (50 ft³/h). After these flow rate and time requirements have been met, the gas flow is reduced to 0.57 m³/h (20 ft³/h) and the induction heater is inserted and is accurately positioned relative to the sleeve expanded area and braze rings 16. When the braze temperature of between 982°C and 1027°C (1800°F and 1880°F) is reached, an automatic controller holds the temperature for a minimum of two minutes. After the two minute braze hold, the temperature is reduced to between 816°C and 843°C (1500°F and 1550°F) and the temperature is held again for 5 minutes to thermally treat the Inconel-600 sleeve 10 and tube 22. Following the thermal treatment, power to the induction heater is shut off and the heater is then removed.

Explosively welding the sleeve 10 to the tube 22 near the lower face of the tube sheet 20 is the final step in the sleeve installation process. An explosive weld cartridge is inserted into the sleeve 10 and detonated. The detonation shatters the weld cartridge and welds the sleeve 10 to the tube 22. Following the detonation of a batch of the weld cartridges, the debris is removed from the head of the steam generator 18. After detonation, the sleeve 10 is welded to the tube 22 over a length of about 25.4 mm (1 in) from about 38 to 64 mm (1.5 to 2.5 in) from the lower end of the tube 22. The explosive welding process also expands the sleeve 10 to the tube 22 for a length of 12.7 mm (0.5 in) above and below the 25.4 mm (1 in) welded region.

Accomplishing the objectives of increasing installation rates and reducing man-rem exposure requires the integration of the sleeve design, installation process and tooling. Certain process times will be inherent in the installation. The tooling should minimise the time required to locate and position the tooling at the tube end and reliably perform the specific operation. In addition, the tooling should accomplish as much as possible remotely, with a minimum of man machine interface to keep radiation exposure low.

The tooling concept developed to accomplish the above involves the operation of automated tooling from outside the containment. A command centre is used which is located outside the radiation area. From this command centre, all tooling operations can be controlled and monitored. Men, located near the steam generator and in constant communication with the command centre, feed and automatic manipulator located in the steam generator head with the appropriate tools, sleeves and consumables to install the sleeves.

**Claims**

1. A tube (22) of a steam generator (18), the tube (22) being supported by a tube sheet (20) of the steam generator (18), and the tube (22) having a sealable sleeve (10) comprising a tubular member (12 and 14) inserted into the tube (22) in a position spanning a region of degradation of the tube, for repairing the degraded tube, and expandable against the tube by the detonation of an explosive charge introduced into the sleeve (10), the sleeve (10) having a pre-expanded portion (17) at one end for positioning the sleeve in the tube (22) within the tube sheet (20) and adjacent the other end a plurality of external grooves (16) filled with a brazing material which, following said explosive expansion of the sleeve (10) against the tube (22), permits that end of the sleeve to be brazed to the tube by introducing a heating means therein effective to melt the brazing material in the grooves (16), characterised in that the tubular member comprises an inner tubular member (12) of the same material as the tube (22), and an outer member (14) of substantially pure nickel which is thinner than the inner member (12) and is metallurgically bonded to the inner member (12).

2. A tube according to claim 1, wherein the inner tubular member (12) of the sleeve (10) has been subjected to a heat treatment at 718°C ± 28°C (1325°F ± 50°F) for approximately 15 hours producing a stress relieved condition in the material thereof.

3. A tube according to claim 1 or claim 2, wherein the length of the sleeve (10) is substantially greater than the thickness of the tube sheet (20) supporting the tube (22).

4. A tube according to any one of claims 1 to 3, wherein the inner tubular member (12) of the sleeve (10) is an alloy of nickel, chromium and iron in the composition ranges by weight of 72% minimum, 14 to 17% and 6 to 10%, respectively.

5. A method of repairing a degraded tube (22) of a steam generator (18), the tube (22) being supported by a tube sheet (20) of the steam generator (18), the method comprising inserting a sleeve (10) comprising a tubular member (12 and 14) into the tube (22) in a position spanning a region of degradation of the tube, the sleeve (10) having a pre-expanded portion (17) at one end for positioning the sleeve in the tube (22) within the tube sheet (20) and adjacent the other end a plurality of external grooves (16) filled with a brazing material, expanding the sleeve (10) against the tube (22) by detonating an explosive charge within the sleeve, and, following said explosive expansion of the sleeve (10) against the tube (22), melting the brazing material by introducing a heating means into the sleeve (10) to braze that end of the sleeve to the tube, characterised in that the tubular member comprises an inner tubular member (12) of the same material as the tube (22), and an outer member (14) of substantially pure nickel which is thinner than the inner member (12) and is metallurgically bonded to the inner member (12).

6. A method according to claim 5, wherein the inner tubular member (12) of the sleeve (10) has been subjected to a heat treatment at 718°C ± 28°C (1325°F ± 50°F) for approximately 15 hours producing a stress relieved condition in the material thereof.

7. A method according to claim 5 or claim 6, wherein the length of the sleeve (10) is substantially greater than the thickness of the tube sheet (20) supporting the tube (22).

8. A method according to any one of claims 5 to 7, wherein the inner tubular member (12) of the sleeve (10) is of an alloy of nickel chromium and iron in the composition ranges by weight of 72% minimum, 14 to 17% and 6 to 10%, respectively.

## Patentansprüche

1. Rohr (22) eines Dampfgenerators (18), wobei das Rohr (22) von einer Rohrplatte (20) des Dampfgenerators (18) unterstützt ist und das Rohr (22) eine dichtbare Hülse (10) hat, die ein röhrenförmiges Teil (12 und 14) aufweist, das zum Reparieren des beschädigten Rohres in das Rohr (22) in einer sich über einen Beschädigungsbereich des Rohres erstreckenden Stellung eingefügt ist und durch die Detonation einer in die Hülse (10) eingeführten explosiven Ladung gegen das Rohr ausdehnbar ist, wobei die Hülse (10) einen vorausgedehnten Abschnitt (17) am einen Ende zur Positionierung der Hülse in dem Rohr (22) in der Rohrplatte (20) und nahe dem anderen Ende mehrere äußere Nuten (16) hat, die mit einem Hartlötmaterial gefüllt sind, welches nach der explosiven Ausdehnung der Hülse (10) gegen das Rohr (22) es erlaubt, jenes Ende der Hülse mit dem Rohr zu verlöten, indem eine Heizeinrichtung darin eingeführt wird, die wirksam ist, das Hartlötmaterial in den Nuten (16) zu schmelzen, dadurch gekennzeichnet, daß das röhrenförmige Teil ein inneres röhrenförmiges Teil (12) vom gleichen Material wie das Rohr (22) und ein äußeres Teil (14) im wesentlichen aus reinem Nickel, das dünner als das innere Teil (12) ist und metallurgisch mit dem inneren Teil (12) verbunden ist, aufweist.

2. Rohr nach Anspruch 1, bei dem das innere röhrenförmige Teil (12) der Hülse (10) einer Hitzebehandlung bei 718°C ± 28°C (1325°F ± 50°F) während etwa 15 h unter Erzeugung spannungsfreier Bedingungen in seinem Material unterzogen wurde.

3. Rohr nach Anspruch 1 oder Anspruch 2, bei dem die Länge der Hülse (10) wesentlich größer als die Dicke der Rohrplatte (20), die das Rohr (22) unterstützt, ist.

4. Rohr nach einem der Ansprüche 1 bis 3, bei dem das innere röhrenförmige Teil (12) der Hülse (10) aus einer Legierung von Nick, Chrom und Eisen in den Gewichtsbereichen von mindestens 72 % bzw. 14 bis 17 % bzw. 6 bis 10 % ist.

5. Verfahren zum Reparieren eines beschädigten Rohres (22) eines Dampfgenerators (18), wobei das Rohr (22) von einer Rohrplatte (20) des Dampfgenerators (18) unterstützt ist, indem man eine Hülse (10) mit einem röhrenförmigen Teil (12 und 14) in das Rohr (22) in einer sich über einen Beschädigungsbereich des Rohres erstreckenden Stellung einfügt, wobei die Hülse (10) einen vorausgedehnten Abschnitt (17) am einen Ende zum Positionieren der Hülse in dem Rohr (22) in der Rohrplatte (20) und nahe dem anderen Ende mehrere äußere Nuten (16) hat, die mit einem Hartlötmaterial gefüllt sind, das die Hülse (10) gegen das Rohr (22) durch Detonation einer explosiven Ladung in der Hülse ausdehnt, und indem man nach dieser explosiven Ausdehnung der Hülse (10) gegen das Rohr (22) das Hartlötmaterial schmilzt, indem man einen Heizeinrichtung in die Hülse (10) einführt, um das Ende der Hülse mit dem Rohr zu verlöten, dadurch gekennzeichnet, daß das röhrenförmige Teil ein inneres röhrenförmiges Teil (12) aus dem gleichen Material wie das Rohr (22) und ein äußeres Teil (14) im wesentlichen aus reinem Nickel, das dünner als das innere Teil (12) und metallurgisch mit dem inneren Teil (12) verbunden ist, aufweist.

6. Verfahren nach Anspruch 5, bei dem das innere rohrförmige Teil (12) der Hülse (10) einer Hitzebehandlung bei 718°C ± 28°C (1325°F ± 50°F) während etwa 15 h unter Erzeugung spannungsfreier Bedingungen in seinem Material unterzogen wurde.

7. Verfahren nach Anspruch 5 oder Anspruch 6, bei dem die Länge der Hülse (10) wesentlich größer als die Dicke der Rohrplatte (20), die das Rohr (22) unterstützt, ist.

8. Verfahren nach einem der Ansprüche 5 bis 7, bei das innere röhrenförmige Teil (12) der Hülse (10) aus einer Legierung von Nickel, Chrom und Eisen in den Gewichtsbereichen von mindestens 72 % bzw. 14 bis 17 % bzw. 6 bis 10 % besteht.

## Revendications

1. Tube (22) de générateur de vapeur (18), le tube (22) étant supporté par une plaque à tubes (20) du générateur de vapeur (18), et le tube (22) présentant un manchon soudable (10) comportant un élément tubulaire (12 et 14), inséré dans le tube (22) en un emplacement chevauchant une région de dégradation du tube, pour réparer le tube dégradé, et expansible contre le tube par détonation d'une charge explosive introduite dans le manchon (10), le manchon (10) présentant à une extrémité un tronçon expansé (17) pour positionner le manchon dans le tube (22) à l'intérieur de la plaque à tubes (20), et près de l'autre extrémité une pluralité de rainures extérieures (16) remplies d'une matière à braser qui, à la suite de ladite expansion explosive du manchon (10) contre le tube (22), permet de braser au tube cette extrémité du manchon en introduisant dans son intérieur un moyen de chauffage propre à fondre la matière à braser présente dans les rainures (16), caractérisé en ce que l'élément tubulaire comporte un élément tubulaire intérieur (12) de même matériau que le tube (22), et par un élément extérieur (14) en nickel sensiblement pur qui est plus mince que l'élément intérieur (12) et est lié métallurgiquement à l'élément intérieur (12).

2. Tube selon la revendication 1, dans lequel l'élément tubulaire intérieur (12) du manchon (10) à été soumis à un traitement thermique à 718°C ± 20°C (1325°F ± 50°F) pendant approximativement 15 heures ce qui donne dans sa matière un état de détente des contraintes.

3. Tube selon la revendication 1 ou la revendication 2, dans lequel la longueur du manchon (10) est sensiblement plus grande que l'épaisseur de la plaque à tubes (20) supportant le tube (22).

4. Tube selon l'une quelconque des revendications 1 à 3, dans lequel l'élément tubulaire intérieur (12) du manchon (10) est en un alliage de nickel, chrome et fer dans les intervalles de compositions en poids de 72 % au minimum, de 14 à 17 % et de 6 à 10 %, respectivement.

5. Procédé de réparation d'un tube dégradé (22) de générateur de vapeur (18), le tube (22) étant supporté par une plaque à tubes (20) du générateur de vapeur (18), le procédé comprenant l'insertion dans le tube (22) d'un manchon (10) comportant un élément tubulaire (12 et 14) en un emplacement chevauchant une région de dégradation du tube, le manchon (10) présentant à une extrémité un tronçon expansé (17) pour positionner le manchon dans le tube (22) à l'intérieur de la plaque à tubes (20) et près de l'autre extrémité une pluralité de rainures extérieures (16) remplies d'une matière à braser, expansion du manchon (10) contre le tube (22) par détonation d'une charge explosive à l'intérieur du manchon, et, à la suite de ladite expansion explosive du manchon (10) contre le tube (22), la fusion de la matière à braser introduisant un moyen chauffant dans le manchon (10) pour braser au tube cette extrémité du manchon, caractérisé en ce que l'élément tubulaire comporte un élément intérieur (12) de même matériau que le tube (22), et un élément extérieur (14) en nickel sensiblement pur qui est plus mince que l'élément intérieur (12) et est lié métallurgiquement à l'élément intérieur (12).

6. Procédé selon la revendication 5, dans lequel l'élément tubulaire intérieur (12) du manchon (10) a été soumis à un traitement thermique à 718°C ± 28°C (1325°F ± 50°F) pendant approximativement 15 heures ce qui donne dans sa matière un état de détente des contraintes.

7. Procédé selon la revendication 5 ou la revendication 6, dans lequel la longueur du manchon (10) est sensiblement plus grande que l'épaisseur de la plaque à tubes (20) supportant le tube (22).

8. Procédé selon l'une quelconque des revendications 5 à 7, dans lequel l'élément tubulaire intérieur (12) du manchon (10) est en un alliage de nickel, chrome et fer dans les gammes de compositions en poids de 72 % au minimum, de 14 à 17 % et de 6 à 10 %, respectivement.

FIG. 1

## FIG. 2

## FIG. 3